# EUROPEAN PATENT APPLICATION

(11) **EP 2 308 778 A2**
(43) Date of publication of application: **13.04.2011**
(21) Application number: 10187062.4
(22) Date of filing: 08.10.2010
(51) Int. Cl.: B65G 1/06, B66F 7/06

(54) **Automated warehouse shuttle**

(30) Priority: 09.10.2009 IT TO20090771
(71) Applicant: ICAM S.r.l., Putignano (IT)
(72) Inventor: Bianco, Roberto, 70017 Putigano (IT); Bianco, Graziano, 70017 Putigano (IT); Cattani, Enrico, 19122 La Spezia (IT); Umbrello, Francesco, 88060 Petrizzi (IT); Negri, Simone Pio, 70026 Modugno (IT)
(74) Representative: Jorio, Paolo

(57) **Abstract**

An automated warehouse shuttle (1) has an upper surface (50) for supporting a load unit and a lifting assembly for lifting/lowering the upper surface (50); the shuttle (1) has a structure provided with a horizontal base wall (44), which inferiorly defines a compartment housing at least one battery pack (92); the battery pack (92) is releasably coupled to the structure, and the horizontal base wall has an opening that places the compartment in communication with the outside to remove and/or mount the battery pack (92) from below.
The lifting assembly comprises a screw/nut combination, a cam and two levers.
The warehouse also comprises a station to recharge the batteries that have been removed from a shuttle.

## Description

This invention refers to an automated warehouse shuttle. Japanese patent application number JP08-157016 describes a shuttle equipped with four motorized wheels that run on tracks in corridors in the warehouse. The shuttle can pass beneath the rows of pallets, which are supported on brackets arranged in the corridors above these tracks. The four wheels are steerable, i.e. they can be rotated by 90 degrees about respective vertical axes, in order to travel in two orthogonal directions. To lift the load units, the shuttle has an upper platform that is raised by a lever-operated lifting device, which is arranged in a central compartment of said shuttle.

This solution is not very satisfactory, as the shuttle comprises rechargeable batteries that are arranged along the front edge and the rear edge of the floor, while this space is needed for installing sensors and other equipment.

Furthermore, the lever-operated lifting device is fixed to a metal sheet that defines the floor of the shuttle, and from which the wheels project downwards. This metal sheet therefore supports the lifted load unit and must be strengthened when the shuttle is used for heavy weights, therefore adaptations are necessary, but they are not easy to carry out. In addition, said metal sheet is part of a load-bearing body shell which is inflexible, i.e. it cannot be easily adapted to make shuttles of different sizes.

The aim of the present invention is to provide a shuttle for an automated warehouse, which overcomes the problems outlined above in a simple and economical manner. According to the present invention there is provided an automated warehouse shuttle as defined in claim 1.

The invention will now be described with reference to the accompanying drawings, which illustrate a nonlimiting embodiment thereof, in which:
- figure 1 is a perspective view, with exploded parts, of a preferred embodiment of a warehouse shuttle according to the present invention;
- figure 2 is a different perspective view that shows the shuttle in figure 1 with parts removed for the sake of clarity;
- figure 3 shows a detail of figure 2, on an enlarged scale and with a component shown in an exploded view;
- figures 4 and 5 show another detail of figure 2, seen on an enlarged scale from two opposing points of view; and
- figure 6 shows a perspective view of an automated system for replacing a battery pack in the shuttle in figure 1.

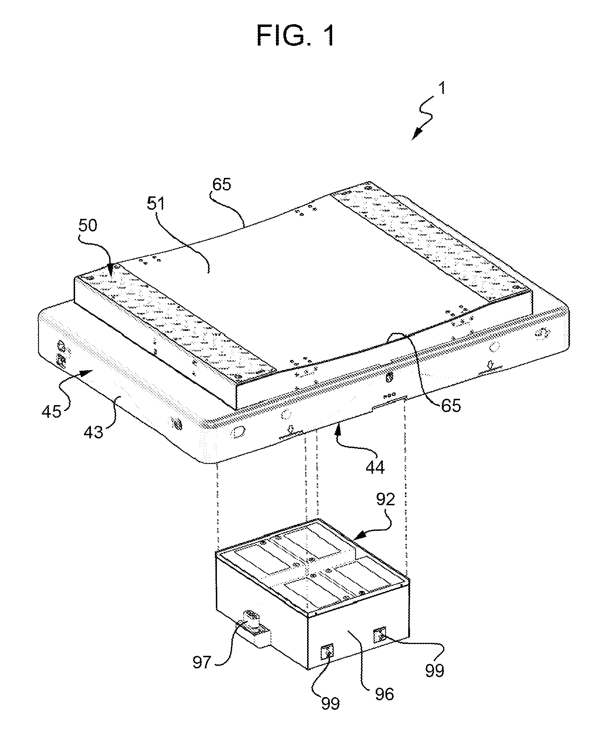

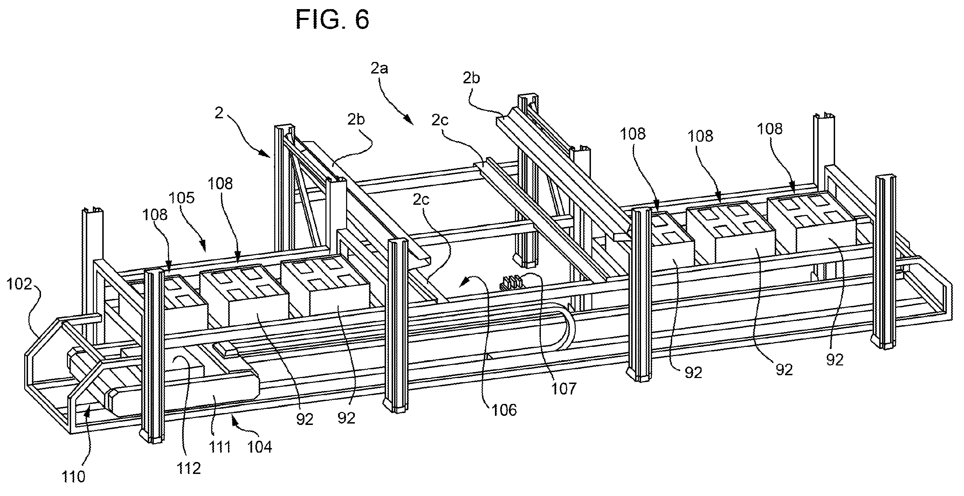

In figure 1, number 1 indicates a shuttle for a warehouse comprising a fixed structure, which is partially shown and indicated by reference number 2 in figure 6 and defines a plurality of tiers or overlapping levels that can be reached by the shuttle 1 with a lifting device such as, for example, an elevator (not shown). With reference to figure 6, each level consists of a group of corridors 2a, only one of which is shown. Load units (not shown) are stored in at least part of the corridors 2a. The load units are defined, for example, by pallets and are stored by resting them on brackets 2b arranged along the side of the corridors 2a. The term "shuttle" refers to a vehicle on wheels, which is remotely controlled from a central control unit (not shown) to travel along the corridors 2a of the warehouse and preferably also in the neighboring areas around the structure 2, to automatically pick up, carry and deposit the load units. The shuttle 1 travels along rails or a track 2c, arranged under the support brackets 2b for the load units, and is relatively small in height so as to be able to pass under the stored load units when unloaded.

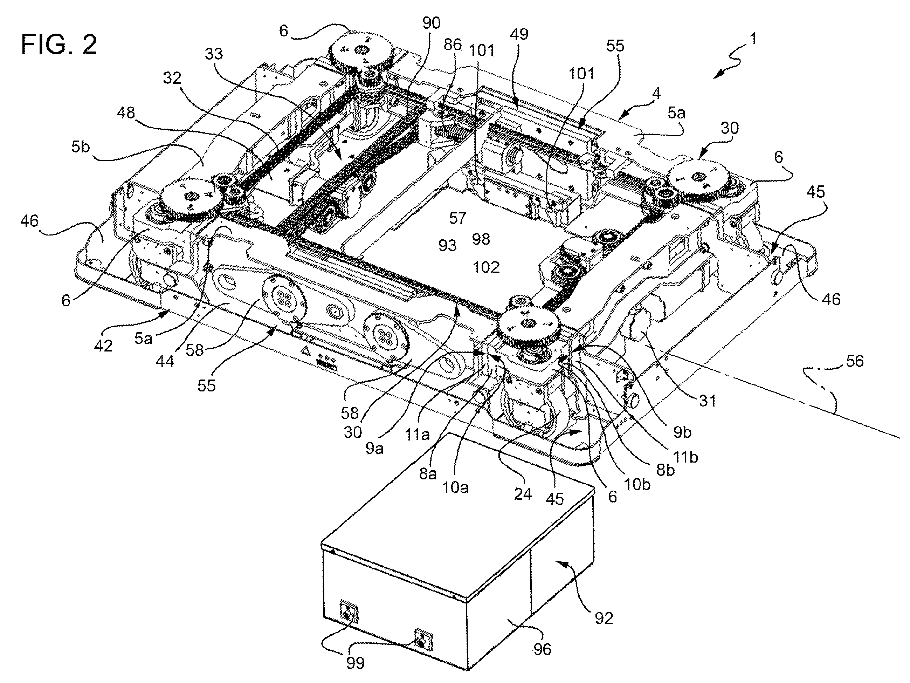

As shown in Figure 2, the shuttle 1 comprises a load-bearing frame 4, which consists of two longitudinal members 5a, two cross members 5b and four angular elements 6. Each of the angular elements 6 defines the joint between the end of a cross member 5b and the end of a longitudinal member 5a. In particular, each angular element 6 comprises two vertical walls 8a, 8b having respective flat outer faces 9a, 9b, which are reciprocally orthogonal and are arranged, respectively, against a flat vertical face 10a defined by the end wall 11a of a longitudinal member 5a, and a flat face 10b defined by the end wall 11b of a cross member 5b. Preferably, the connections between the walls 8a, 11a and between the walls 8b, 11b are made using screws or bolts (not shown) inserted in the holes in said walls. Preferably, the longitudinal members 5a and cross members 5b are defined by steel girders. In each of the two longitudinal members 5a, the two sides 10a are flattened parallel to each other. Likewise, in each of the two cross members 5b, the two faces 10b are flattened parallel to each other.

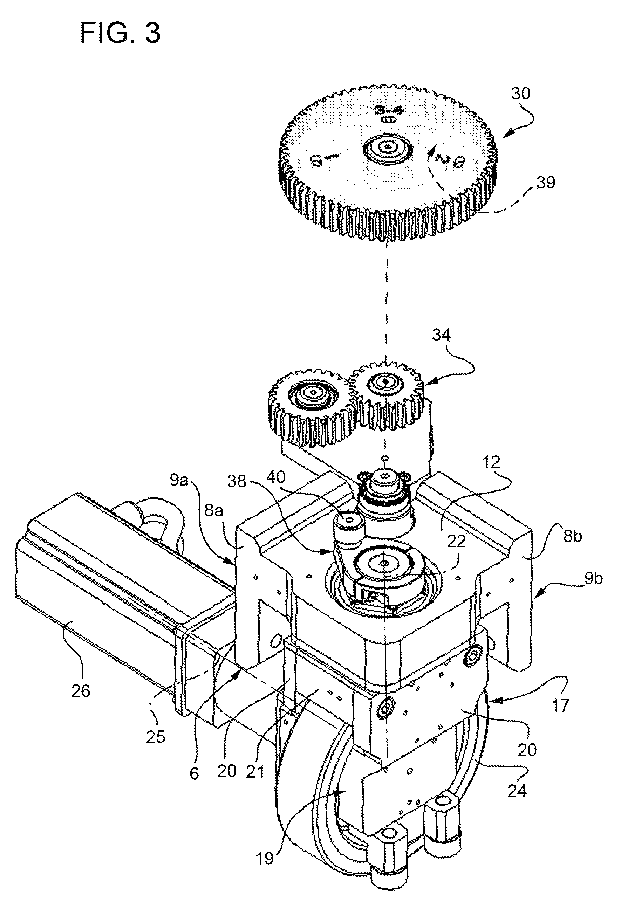

With reference to figure 3, the angular elements 6 comprise respective upper portions 12 that support respective wheel assemblies 17. The latter comprise respective fork members 19: each member 19 comprises two lower vertical sides 20 and an upper portion 21, which is hinged to the corresponding wall 12 in order to rotate about a vertical steering axis 22 and is housed in a compartment defined by the walls 8a, 8b and the portion 12.

Each wheel assembly 17 comprises a wheel 24, which is coupled to the sides 20 so as to rotate about its horizontal axis 25. Furthermore, each wheel assembly 17 comprises a bidirectional electric motor 26, which is coupled to one of the sides 20 of the member 19, in a fixed position and coaxially with the wheel 24, causes the wheel 24 to rotate, is arranged towards the inside of the shuttle 1, and passes under the frame 4 during steering of the wheel assembly 17.

With reference to figures 2 and 3, to steer all four wheel assemblies 17 by the established steering angle, i.e. 90°, the shuttle 1 comprises a steering assembly 30 provided with a single bidirectional electric motor 31 which is arranged under one of the cross members 5b and is coupled to a reduction gear. Preferably, the assembly 30 comprises a chain or belt type transmission 32 driven by the motor 31 via the reduction gear. The chain or belt of the transmission 32 extends parallel to the longitudinal members 5a and the cross members 5b, inside a central compartment 33 defined by the frame 4. The transmission 32 operates four gear transmissions 34 mounted respectively on the angular elements 6. In turn, each transmission 34 drives a cam and tappet type transmission 38 which comprises: a groove 39 obtained on one side of a driven gear of the transmission 34; and a tappet element 40 fixed angularly with respect to the underlying member 19.

With reference to figures 1 and 2, the shuttle 1 also comprises an outer casing 42 which is secured to the frame 4 in a not shown manner and comprises: a perimeter wall 43 that extends up to a height that is sufficient to accommodate the frame 4; and a horizontal base wall 44 provided at the four vertices with openings 45, through which the wheels 24 projects downwards to come into contact with the warehouse rails 2c.

The wall 44 comprises two opposing end portions 46 which are horizontally cantilevered with respect to the crossbeams 5b and support the respective parts of a processing and control unit (not shown), which thus flank the cross members 5b. The processing and control unit receives commands sent from the control unit and the signals emitted by a plurality of sensors (not shown) mounted on board the shuttle 1 and, in response to said commands and signals, controls the motors 26 and 31 and another electric motor indicated by reference number 48.

The motor 48 is arranged at least partially under one of the two cross members 5b, and drives a reduction gear that occupies a rear space in the compartment 33, on the opposite side to the motor 31. The motor 48 and the relative reduction gear are part of a lifting assembly 49, which lifts/lowers an upper surface 50 provided for supporting the load units and defined, in particular, by a rectangular platform 51. In other words, the assembly 49 moves a load unit vertically with respect to the support brackets 2b provided in the corridors 2a of the warehouse, in order to load/unload the load unit. In a plan view, the platform 51 is smaller in size than the perimeter defined by the underlying wall 43.

The assembly 49 comprises two identical transmission devices 55, arranged, respectively, on either side of the shuttle 1, in other words, in symmetrical positions with respect to a longitudinal centerline axis 56 of the shuttle 1 and transversely spaced with respect; and a chain or belt transmission 57 that transfers the motion from the ratiomotor to both devices 55.

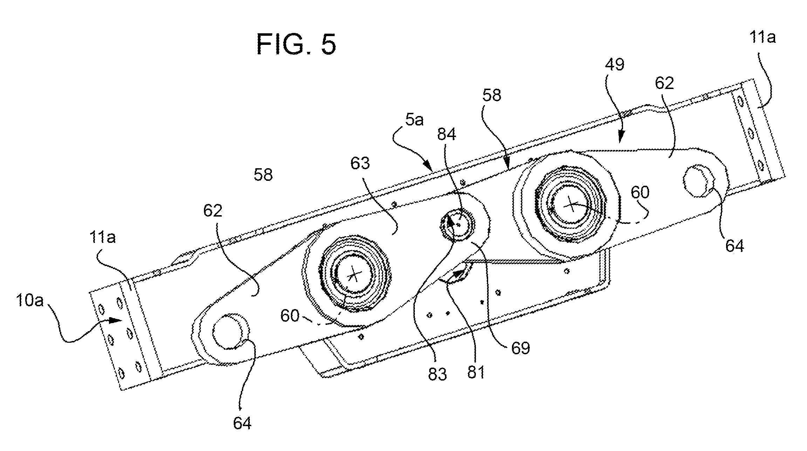

With reference to figures 2 and 5, the devices 55 comprise respective pairs of levers 58, which are arranged on the sides between the longitudinal members 5a and the wall 43 and are hinged to the longitudinal members 5a so as to rotate about horizontal axes 60 perpendicular to the axis 56. Preferably, the levers 58 are rocker arms defined by vertical plates comprising respective intermediate hinge portions and respective opposed radial arms 62, 63.

The ends 64 of the arms 62 support, (in a manner that is not illustrated), two lower side portions 65 of the platform 51 (figure 1).

The method used to connect the ends 64 and the portions 65 is clearly such as to compensate for the variation in the longitudinal distance between the ends 64 during the rotation about the axes 60: for example, for each of the two portions 65, the end 64 of one of the two arms 62 defines a hinge axis that is parallel to the axes 60 and is fixed with respect to the platform 51, while the end 64 of the other of the two arms 62 defines a hinge axis that is parallel to the axes 60 and is movable with respect to the platform 51 along the axis 56.

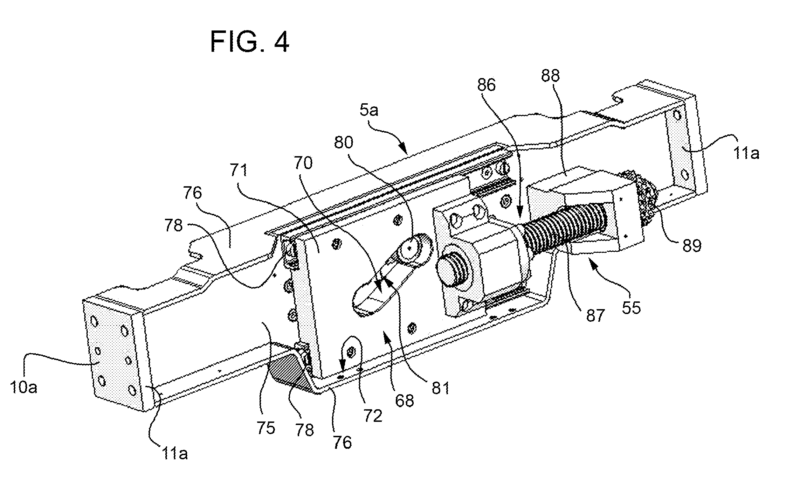

With reference to figures 4 and 5, the devices 55 comprise respective cam and tappet transmissions 68, which push the ends 69 of the arms 63 with a vertical motion component to rotate the levers 58. The transmissions 68 comprise respective cams 70, which are guided so as to translate parallel to the axis 56 and are preferably arranged inside the frame 4, i.e. on the side opposite the levers 58 with respect to the longitudinal members 5a. In particular, they are defined by grooves, which are obtained in vertical plates 71 housed in compartments 72 defined by the longitudinal members 5a. The compartments 72 are open towards the compartment 33 and are defined by the metal sheets of the longitudinal members 5a, in particular by a vertical wall 75 and two fins 76, which project horizontally towards the center of the shuttle 1 from the upper and lower edges of the wall 75.

The plates 71 are coupled to the walls 75 by means of respective guides 78 parallel to the axis 56, and the cams 70 are slidingly engaged by respective tappet elements defined by pins 80 parallel to the axes 60.

On each side of the shuttle 1, the pin 80 passes with clearance through a passage 81 obtained in the wall 75 and is coupled at both ends 69, which overlap each other along the axis of the pin 80. The connection between the ends 69 and the pin 80 is clearly achieved so as to compensate for the loss of alignment between the ends 69 during the rotation about the axis 60: in particular, one of the two ends 69 has a radial slot 83 engaged, through the interposition of a bearing, by an end portion 84 of the pin 80, which then slides in the slot 83; the other end 69 is fixed to an intermediate portion of the pin 80.

The cams 70 have respective intermediate ramps that push the pin 80 upwards or downwards when they are moved along the guides 78. The cams have two opposing end portions that are horizontally straight and define the end of the stroke of the pins 80. To force the transfer movement of the cams 80, the devices 55 comprise respective screw-nut screw transmissions 86, comprising respective worm screws 87 rotatingly supported in fixed axial positions by respective blocks 88 fixed to the walls 75. Both worm screws 87 are turned by the transmission 57; in particular they have respective sprockets 89 on each end on which a chain or belt 90 is wound (figure 2); the chain or belt 90 extends from one longitudinal member 5a to the other in the compartment 33 and is actuated by the motor 48 in a manner that is not illustrated. In this way, the motion of the two cams 70 is synchronized so as to raise the platform 51 evenly on both sides.

As mentioned above, the compartment 33 has a perimeter defined by the frame 4 and houses the reduction gears of the motors 31 and 48 and the transmissions 32, 57, 38 and 86. With reference to figure 2, the central part of the compartment 33 also houses a battery pack 92. The wall 44 is provided with an intermediate opening 93, which puts the compartment 33 into communication with the outside. The battery pack 92 is made to pass through the opening 93 in a vertical direction when it needs to be removed and replaced in the shuttle 1, in particular to recharge the batteries.

With reference to figure 1, the battery pack 92 comprises a container 96, which is made of metal, is prepared for possible thermal insulation, houses the batteries and is fitted, on the outside, with a multipole electrical connector 97 for coupling to a corresponding connector (not shown) provided in the compartment 33. Preferably, these two connectors are electrically coupled simply via contact.

Battery recharging lines and power supply lines pass through the connector 97. The power supply lines supply power to the electrical and electronic equipment aboard the shuttle 1.

The container 96 is connected to the frame 4 via a releasable coupling device 98 and comprises four support pins 99, which are arranged in pairs on two opposite sides of the container 96.

According to an embodiment that is not illustrated, the device 98 comprises a groove, which is fixed with respect to the frame and shaped to engage the pins 99 by means of a bayonet coupling.

In the embodiment illustrated in figure 2, the device 98 comprises two pairs of seats 101 open at the bottom and a cursor 102, which is coupled to the frame 4 so as to move horizontally, parallel to the axis 56, between a locked position, in which the pins 99 are maintained in their seats 101 in a vertical position, and an unlocked position, in which the lower openings of the seats 101 are opened to let the pins 99 descend freely. The cursor 102 is actuated by means of an electric motor (not shown) mounted on board the shuttle 1, or by a device (not shown) that is part of a replacement system for mounting and removing the battery pack 92 from below. The replacement system may be automatic (without any operator intervention), for example defined by the module 104 shown in figure 6 and described below, or semi-automatic, for example with a carriage operated by an operator.

With reference to figure 6, the battery pack 92 is removed and replaced and the batteries are recharged in a recharging station 105. The recharging station 105 has a station 106 that is connected to the corridors 2a of the structure 2 via rails 2c or is defined by a cell of the structure 2, is dedicated to park the shuttle 1 that requires replacement of the battery pack 92 from below, and is also provided with a connector 107 to which the shuttle 1 can be directly connected in order to recharge the internal batteries. Therefore, in the recharging station 105 the batteries can be recharged both with the battery pack 92 extracted from the compartment 33, and with it on board the shuttle 1.

The recharging station 105 also has a plurality of stations 108, each equipped with an automatic battery charger (not shown) for recharging the battery pack 92, and a releasable coupling device (not shown) that holds the battery pack 92 in the station 108 during recharging and parking. This releasable coupling device is the same as the device 98.

Preferably, the stations 108 are aligned with each other and are arranged on opposite sides of the station 106. The module 104 is located beneath the stations 106 and 108, it can be added to the warehouse structure 2 as an option and is small enough, in the vertical direction, to be inserted into a corridor 2a, in place of a load unit, between the support brackets 2b and the rails 2c of the upper level, where the recharging station 105 is located. In the example shown, the recharging station 105 is located at the first level of the structure 2, therefore the module 104 is arranged at a lower level, on a floor to which the uprights of the structure 2 are fixed.

The module 104 comprises a load-bearing structure 109 and a horizontal lane 110 which follows a route extending beneath the stations 106 and 108. The module 104 also comprises a carriage 111, which automatically moves along the lane 110 in response to the commands sent from the central control unit and is able to collect or store a battery pack 92 inside the shuttle 1 in the station 106 or in any of the stations 108. Preferably, the carriage 111 is pulled or is driven by its motors, so as to move along the lane 110, and is guided along the lane 110 so as to prevent sideways movements.

The carriage 111 comprises a platform 112, which is raised and lowered, in a manner that is not illustrated, by a pantograph linkage, driven by a motor by means of a screw-nut screw transmission. This transmission prevents the platform 112 from moving backwards during the coupling-release phase of the battery pack 92 (in the shuttle 1 or in the station 108).

Alternatively, the platform 112 is fixed to the carriage 111 and the carriage 111 is moved entirely in a vertical direction by means of a lifting and lowering system that operates on the lane 110 or on portions of the lane 110. To replace a discharged battery pack 92, the shuttle 1 is positioned in the station 106, and the carriage 111 is positioned beneath the shuttle 1. A mechanical centering device and/or position control of the carriage 111 are provided to vertically align the platform 112 with the opening 93 and the device 98. The platform 112 is raised and, at the end of its vertical run, it activates the device 98, by suitable means which are not illustrated, to release the battery pack 92, which thus comes to rest on said platform 112.

After lowering the platform 112, the carriage 111 transfers the removed battery pack 92 to beneath an available station 108. Once this position is reached, the platform 112 is raised again: at the end of its run, it actuates the releasable coupling device of the station 108 so as to couple the battery pack 92, which then begins to recharge.

At this point, the carriage 111 is positioned beneath a station 108 which contains a recharged battery pack 92, and performs operations similar to those described in order to transfer it and couple it inside the compartment 33 of the shuttle 1.

Thus, the module 104 has a first motorized drive to transfer the carriage 111 and a second motorized drive to raise/lower the platform 112. Preferably, the vertical position of the platform 112 is also controlled for the second drive. Other sensors or controls are provided in the module 104 to verify the presence/absence and/or recharging of the battery packs 92.

For example, the following sensors are provided for the platform 112:
- two proximity switches (inductive or mechanical) to detect the vertical alignment of the platform 112 with the shuttle 1 and with the station 106;
- an inductive proximity sensor to detect the presence of the battery pack 92 on the carriage 111. Also included is an optional communication system between the module 104 and the central control unit of the warehouse to monitor the number and location of the charged battery packs that are available, monitor the status of the replacement of a battery pack 92 on a shuttle 1 up to completion, and supervise the module 104.

Using the module 104, it is estimated that the time needed to replace a battery pack 92 is approximately 80 seconds (while with a semi-automated system the expected time is around 3 minutes).

The advantages of the shuttle 1 and warehouse described above are clear from the above description. In particular, the creation of an opening in the wall 44 to extract and replace the battery pack 92 avoids having to use the perimeter spaces of the shuttle 1, which are used for other equipment and the frame 4, and avoids having to use the upper part of the shuttle 1, which is used to transport load units. Moreover, since the weight of the load unit is borne by the frame 4, there are no size and/or structural limitations to the functions of the wall 44, which can therefore easily be designed and used to extract the batteries quickly. In other words, the lower part of the shuttle 1 and the corresponding part beneath the recharging station 105 are not used for anything else nor do they serve any other purposes, making it easy to design the systems for coupling the battery pack 92 in the shuttle 1 and replacing the battery pack 92 quickly.

As for the assembly 49, the position and structural features of the devices 55 enable a significant reduction in size compared to the prior art solutions. In particular, the devices 55 occupy a vertical space, but have a reduced thickness in the transverse direction, making them suitable for use in small spaces on either side of the shuttle 1. Moreover, the devices 55 are both driven by a single motor 58, further reducing the overall volume and the movement of the levers 58 on both sides is synchronized. In other words, the assembly 49 allows the lifting force to be distributed evenly on the opposite sides of the platform 51.

The shape of the cam 70 enables the width and the curve of the lifting speed of the platform to be adjusted to the transfer speed of the cam 70. Furthermore, by creating a cam 70 with relatively long horizontal straight end portions, the end of travel positions of the platform 51 defined by the cam 70 are independent of the position in which the motor 48 stops. In other words, the worm screws 87 may continue to rotate by relatively large margins even when the platform 51 has reached its upper and lower ends of travel. This solution does not require sophisticated or precise control of the motor 48, and compensates for the clearance of the transmissions 57 and 86.

In addition, the transmissions 68 do not require lubrication and consist of easily processed parts. The longitudinal members 5a and the levers 58 are also simple to produce, since they are made of cut and welded metal sheets.

Furthermore, the weight of the load unit is distributed evenly over the frame 4 thanks to the coupling of the levers 58 with the longitudinal members 5a. The frame 4 is relatively robust, i.e. it is extremely rigid, insensitive to the load and is made of elements that are easy to produce, work and assemble.

Moreover, by varying the length of the two longitudinal members 5a and/or the length of the two cross members 5b it is possible to adjust the length and width of the frame 4, to achieve a variety of shuttles 1 for various uses. In other words, the possibility of adjusting the size of the frame 4 by only making changes to the longitudinal members 5a and/or to the cross members 5b allows for a modular, simple, and economical solution. The cost of the other parts remains unchanged, since these can be reused in the different versions of the shuttle 1.

The configuration of the frame 4 with the angular elements 6 makes it possible to achieve high dimensional and geometric precision for the frame 4 and therefore high precision in the positioning of the equipment and high precision in the overall size of the shuttle 1, with relatively few work processes. The coupling tolerances are only defined by flattening of the faces 9a, 9b, 10a, 10b, by the parallelism between the faces 10a, by the parallelism between the faces 10b, and by the orthogonal spacing between the faces 9a and 9b. This means there is no particular need to focus on construction tolerances and precision in assembling the casing 42, which does not bear the load of the load units.

Given the characteristics of the frame 4 and/or the assembly 49, the compartment 33 can be used to house electrical/electronic equipment, mechanical transmissions and especially the battery pack 92. The assembly 47, the cross members 5b, the motors 31 and 48, the transmission 57 and the battery pack 92 are thus arranged along the axis 56 and not sideways. More specifically, the compartment 33 easily houses the battery pack 92 and the transmission 57 in the center, the ratiomotors 31 and 21 in the front and rear areas, and the transmissions 38 and 86 in the side areas. Lastly, from the above description, it is clear that modifications and variations may be made to the shuttle 1 described herein without departing from the scope of the present invention as set forth in the appended claims.

In particular, even if the intended location for the battery pack 92 in the shuttle 1 has a synergic effect with the frame 4 and with the assembly 49, the method used to extract and replace the battery pack 92 from below may also be used on shuttles with a lifting assembly that is different from that described and/or on a shuttle with a load-bearing body shell.

The batteries could be arranged in an area other than the central position described by way of example; and/or the opening 93 provided in the wall 44 to remove/insert the battery pack 92 could be opened/closed by means of a movable or removable panel.

The frame 4 (in particular the longitudinal members 5a) may have structural and geometric characteristics that differ from those illustrated by way of example.

On each side of the shuttle 1, the levers 58 could define a linkage other than the one illustrated, for example, they could form an articulated quadrilateral, or a pantograph, and the tappet element 80 could act on just one of the two levers 58 to raise/lower the platform 51. Furthermore, there could be a respective cam 70 for each lever 58 and/or a respective tappet element for each lever 58.

Moreover, the assembly 49 could have two synchronized motors, one for each cam 70, and/or the cams 70 could be defined with a shape other than the groove and/or be obtained on members other than the plate 71 and/or the levers 58 could have a different shape from that illustrated; and/or the motor 48 and transmissions 57 could be replaced by another actuator device and/or by another transmission, to translate the cams 70 in a synchronized manner.

The shuttle 1 could be able to travel in a single direction, rather than in two orthogonal directions; or it could have a different steering system (e.g. without the transmissions 34; and/or the transmissions 38 could be replaced by levers); or the shuttle 1 could be provided with two sets of four wheels, each set of four wheels to travel in a relative direction.

Lastly, the cams 70 could be rotating cams, with relatively long circular portions arranged on opposite sides of a ramp to define the ends of travel of the pins 80. Also in this way, and not only with linear cams, these portions of the cam offset transmission clearances and make the end of travel positions of the platform 51 independent of the position in which the motor stops.

## Claims

1. An automated warehouse shuttle (1) comprising:
- a structure (4,42) comprising a horizontal base wall (44);
- at least four wheels (24), that project downwards with respect to said horizontal base wall (44);
- moving means (30,26) for driving said wheels (24) and displacing the shuttle;
- an upper support surface (50) for a load unit;
- lifting means (49) for lifting/lowering said upper support surface (50) with respect to said structure (4,42);
- at least one battery pack (92) arranged in a compartment (33) defined inferiorly by said horizontal base wall (44);
**characterized by** comprising releasable coupling means (98) that releasably couple said battery pack (92) to said structure (4,42); and in that said horizontal base wall (4) has an opening (93) that puts said compartment (33) into communication with the outside to remove and/or mount said battery pack (92) from below.

2. The shuttle according to claim 1, **characterized in that** said structure (4,42) comprises a load-bearing frame (4) which defines the perimeter of said compartment (33); said battery pack (92) being releasably coupled by said releasable coupling means (98) to said load-bearing frame (4).

3. The shuttle according to claim 2, **characterized in that** said load-bearing frame (4) comprises:
- two longitudinal members (5a);
- two cross members (5b);
- four angular elements (6); each of said angular elements (6) joining the end of one of said cross members (5b) to the end of one of said longitudinal members (5a) and supporting a corresponding said wheel (24).

4. The shuttle according to claim 3, **characterized in that** each of said angular elements (6) has two vertical flat faces (9a,9b), which are reciprocally orthogonal and rest against a flat end face (10a) of a longitudinal member (5a) and against a flat end face (10b) of a cross member (5b) respectively.

5. The shuttle according to any one of the claims from 2 to 4, **characterized in that** said lifting means (49) are coupled to said load-bearing frame (4).

6. The shuttle according to claim 5, **characterized in that** said lifting means (49) comprise:
∼ two transmission devices (55), which are spaced and are respectively arranged on the sides with respect to a longitudinal axis (56) of the shuttle (1), and
∼ actuating means (48,57) for actuating the two transmission devices (55) in a synchronized manner;
each transmission device (55) comprising:
∼ two levers (58) which support said upper support surface (50) and are coupled to said load-bearing structure (4) so as to rotate about horizontal rotation axes (60) orthogonal to said longitudinal axis (56), and
∼ cam and tappet means (68) comprising:
a) at least one tappet element (80) coupled to at least one of said levers (58), and
b) at least one cam (70), which is engaged by said tappet element (80), is coupled to said load-bearing frame (4), is movable in response to the action of said actuating means (48), and is shaped so as to displace said tappet element (80) with a vertical motion component, so as to rotate the lever (58) and accordingly lift/lower the upper support surface (50).

7. The shuttle according to claim 6, **characterized in that** said structure (4,42) comprises an outer casing (42) that houses said load-bearing frame (4); said levers (58), being coupled, respectively, to longitudinal members (5a) of said load-bearing frame (4) and being arranged between said longitudinal members (5a) and said outer casing (42).

8. The shuttle according to claim 7, **characterized in that** said cams (70) are coupled to said longitudinal members (5a) by means of linear guides, and **in that** each transmission device (55) comprises a screw-nut screw transmission (86) actuated by said actuating means (48) for translating said cam (70).

9. A battery replacement system, for mounting/removing a battery pack (92) from below in a automated warehouse shuttle built according to any one of the preceding claims; the system comprising:
∼ a first station (106) for parking said shuttle (1);
∼ at least two second stations (108) having:
a) respective releasable coupling devices to releasably retain the battery packs (92);
b) respective chargers to recharge said battery packs (92);
∼ a horizontal lane (110) that defines a path extending beneath said first and second stations (106,108);
∼ a carriage (111), movable along said lane (110) and comprising a platform (112) for picking up and depositing said battery pack (92);
∼ motor means for vertically displacing said platform (112);
∼ positioning means for stopping said carriage at fixed positions along said lane (110) beneath said first station (106) and/or beneath said second stations (108).

10. The system according to claim 9, **characterized in that** said releasable coupling devices are the same as the releasable coupling means (98) of said shuttle (1).

11. The system according to claim 9 or 10, **characterized in that** said first station (106) has an electrical connector (107) that can be connected to said shuttle (1).

12. The system according to any one of the claims from 9 to 11, **characterized in that** said carriage (111) is pulled or driven in response to commands received from a central control unit to translate along said lane (110) and is guided by said lane (110) so as to prevent sideways movements.

13. The system according to any one of the claims from 9 to 12, **characterized in that** said motor means lift/lower said lane (110) or portions of said lane so as to move said carriage (111) vertically.
